# EUROPEAN PATENT APPLICATION

(11) **EP 3 192 612 A1**
(43) Date of publication of application: **19.07.2017**
(21) Application number: 16185124.1
(22) Date of filing: 22.08.2016
(51) Int. Cl.: B25B 5/00, B25B 5/14, B25B 5/16, B23B 49/02, B23B 47/28

(54) **FIXTURE FOR SECURING COMPONENT TO BE DRILLED AND METHOD OF DRILLING SAME**

(30) Priority: 24.08.2015 US 201514833396
(71) Applicant: General Electric Company, Schenectady, NY 12345 (US)
(72) Inventor: CRAIG, Tiffany Marie, Greenville, SC South Carolina 29615-4614 (US); BUCHAN, Charles Van, Greenville, SC South Carolina 29615-4614 (US)
(74) Representative: Pöpper, Evamaria

(57) **Abstract**

A first aspect of the invention provides for a fixture (100) for securing a component (102) to be drilled. The fixture (100) may comprise: a support structure (120) positioning the component (102) thereon; a template (130) substantially surrounding the component (102) configured to locate a position on the component (102) that is to be drilled, the template (130) being positioned on the support structure (120) and having at least one hole (132) therethrough; and a centering device (150) positioned on the support structure (120) configured to center the component (102) within the template (130). The invention relates also to a method for drilling a wear pad replacement hole into a transition piece (10) of a turbomachine.

## Description

### BACKGROUND OF THE INVENTION

The disclosure relates generally to a fixture for securing a component to be drilled. More particularly, the disclosure relates to a fixture for securing a transition piece that is to be drilled during replacement of a wear pad in the transition piece and method for drilling the same.

Power generation systems, including gas turbines are widely used. A conventional gas turbine system typically includes, *inter alia,* a compressor, a combustor, a turbine section, and a transition piece for connecting the flow of the combustor to the turbine section. During operation of the turbine, components experience vibrations which may result in structural wear to those components and/or the turbine itself. In the transition piece of the turbine, wear pads or spacers have been employed to prevent components of the transition piece from becoming worn due to vibrations. For example, wear pads are used in the transition piece between the transition piece (TP) forward ring and the impingement sleeve which surrounds the TP forward ring. While these wear pads are generally successful in preventing wear caused by vibration, it is expensive and difficult to maintain and replace them.

Generally, replacing the wear pads between impingement sleeves and TP forward rings requires disassembling the transition piece and the combustor in order to remove the worn wear pads and insert new wear pads. Impingement sleeves have been manufactured such that impingement sleeves include two or more parts to allow for disassembly of the impingement sleeve when replacing wear pads.

### BRIEF DESCRIPTION OF THE INVENTION

A first aspect of the invention provides for a fixture for securing a component to be drilled. The fixture may comprise: a support structure positioning the component thereon; a template substantially surrounding the component configured to locate a position on the component that is to be drilled, the template being positioned on the support structure and having at least one hole therethrough; and a centering device positioned on the support structure configured to center the component within the template.

A second aspect of the invention provides for a fixture for securing a transition piece of a turbomachine to be drilled. The fixture may comprise: a support structure positioning the transition piece thereon; a template substantially surrounding the transition piece configured to locating a position on the component that is to be drilled, the template being positioned on the support structure and having at least one drill bit hole therethrough; and a centering device positioned on the support structure configured to center the component within the template.

A third aspect of the invention provides for a method for drilling a wear pad replacement hole into a transition piece of a turbomachine. The method may comprise: providing the transition piece within a template on a support structure, the template having at least one hole therethrough; centering the transition piece within the template via a centering device; inserting a drill bit through the at least one hole of the template to drill the wear pad replacement hole into the transition piece.

The illustrative aspects of the present disclosure are designed to solve the problems herein described and/or other problems not discussed.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a plan view of a side of a conventional transition piece as is known in the art.
FIG 2. shows a top down view of a fixture according to an embodiment of the invention during an operative state.
FIG. 3 shows a side view of a fixture according to an embodiment of the invention during an operative state.
FIG. 4 shows a side view of another side a fixture according to an embodiment of the invention during an operative state.
FIG. 5 shows a perspective view of a side of a fixture according to an embodiment of the invention during an inoperative state.
FIG. 6 shows a side view of a fixture according to an embodiment of the invention during an inoperative state.

It is noted that the drawings of the disclosure are not to scale. The drawings are intended to depict only typical aspects of the disclosure, and therefore should not be considered as limiting the scope of the disclosure. In drawings, like numbering represents like elements between the drawings.

### DETAILED DESCRIPTION OF THE INVENTION

As indicated above, the disclosure provides for a fixture for securing a component which is to be drilled. This disclosure will be described with reference to a transition piece of a turbomachine. However, it is to be understood that embodiments of the fixture as described herein may be used to secure any hollow component to be drilled.

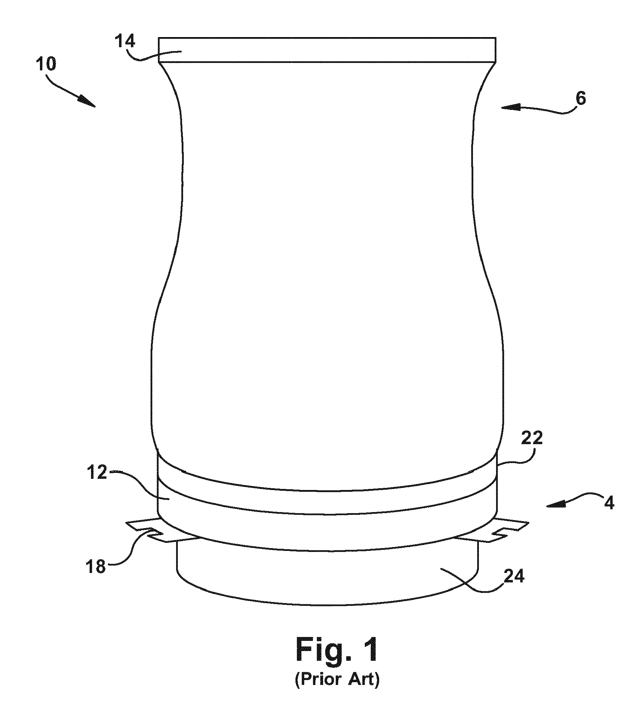

FIG. 1 shows a conventional transition piece 10. As known in the art, transition piece 10 includes a forward or upstream end 4 and a back or downstream end 6. As known in the art, forward and back ends 4, 6 may include support frames. As shown in FIG. 1, forward end 4 includes a forward end support frame 12 and back end 6 includes a back end support frame 14. Forward end support frame 12 may include female parts 18 for connecting or engaging with other portions of the turbomachine in which transition piece 10 is to be installed. Disclosed herein is a fixture which may be used to secure a transition piece which is to be drilled. More particularly, the portion of transition piece 10 which is to be drilled may be an impingement sleeve 22. As known in the art, impingement sleeve 22 may substantially surround a transition piece forward ring 24 of transition piece 10. Transition piece forward ring 24 may slidingly engage with impingement sleeve 22. The concentric arrangement of impingement sleeve 22 and TP forward ring 24 provides a gap (not shown), the gap facilitates the placement of wear pads or spacers therein to prevent TP forward ring 24 and impingement sleeve 22 from vibrating and wearing each other during operation of the turbomachine. It may be desirable to drill impingement sleeve 22 of transition piece 10 in order to replace wear pads (not shown) positioned between impingement sleeve 22 and a transition piece forward ring 24 of transition piece 10.

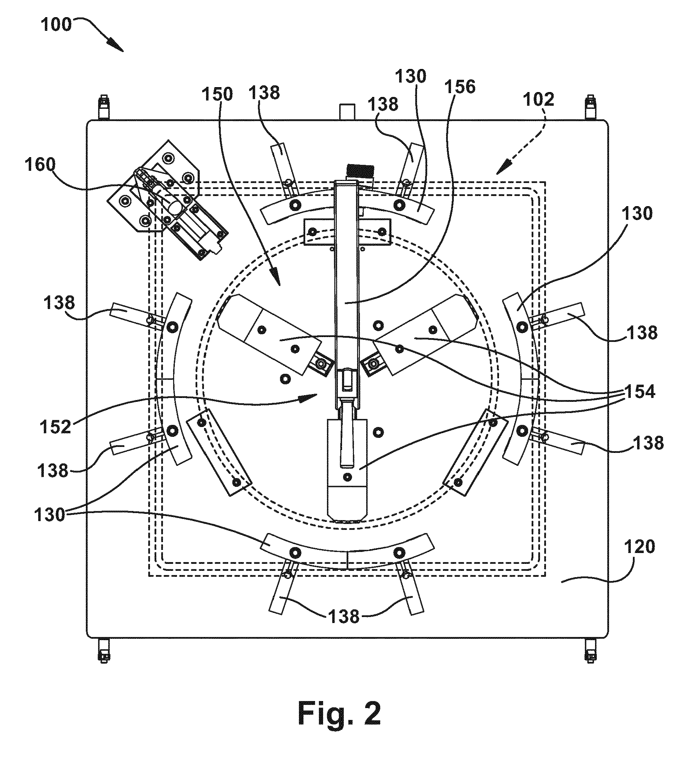

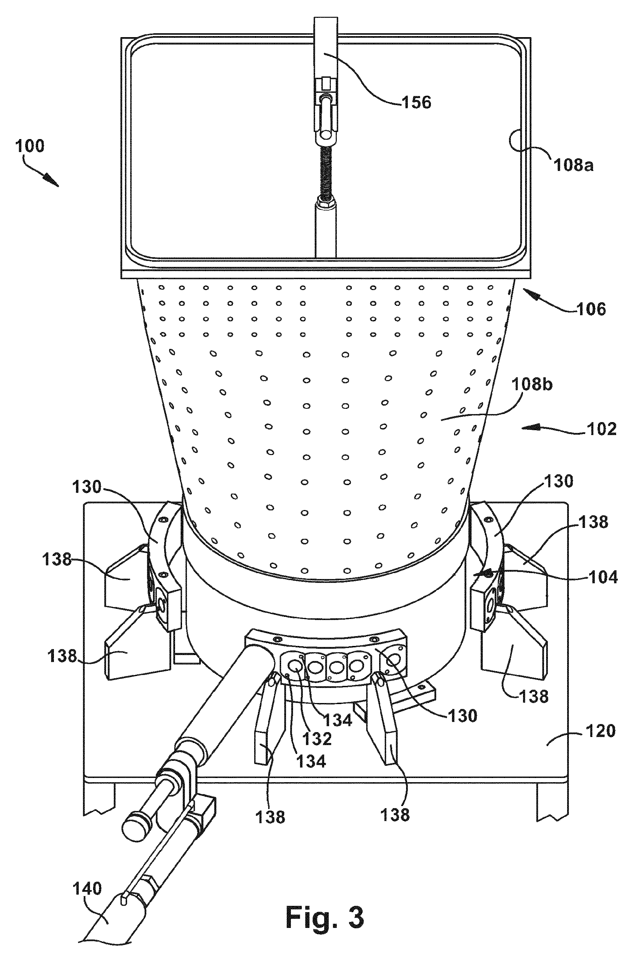

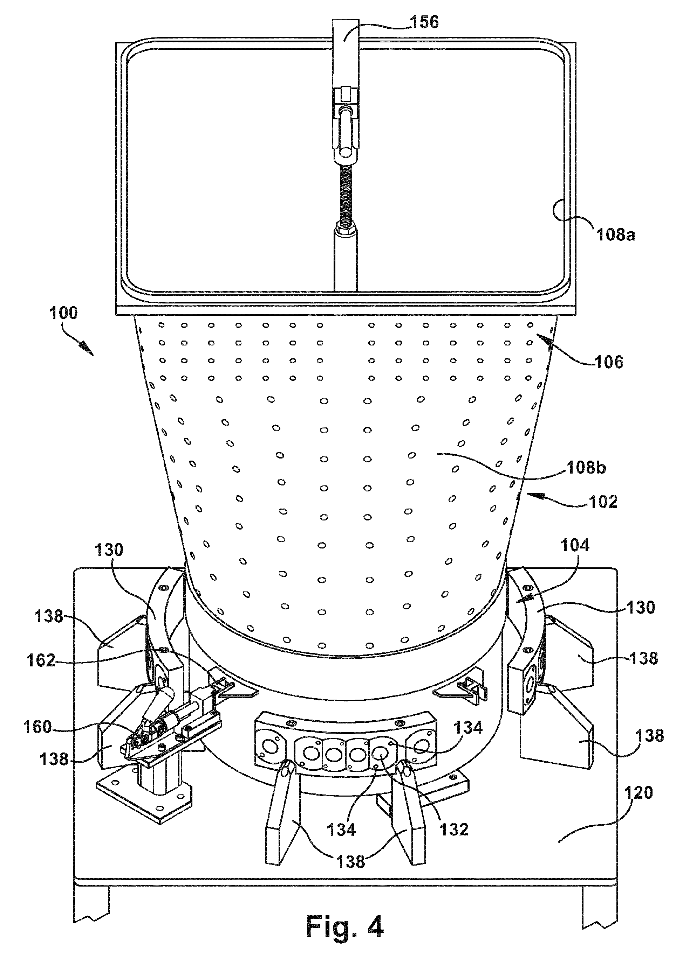

FIGS. 2-4 show fixture 100 according to embodiments of the invention in an operative state. FIG. 2 shows a plan view of fixture 100 according to an embodiment of the invention. FIG. 3 shows a side view of fixture 100 according to an embodiment of the invention. FIG. 4 shows another side view of fixture 100 according to an embodiment of the invention. As used herein, "operative state" includes a state of fixture 100 in which a component 102 (FIGS. 3-4) is positioned within fixture 100. As used herein, an "inoperative state" includes a state of fixture 100 in which a component is not positioned within fixture 100, i.e. fixture 100 is free-standing.

Referring to FIGS. 2-4 together, fixture 100 may be used to secure a component 102 that is to be drilled. In some embodiments, component 102 may include a forward end 104, a back end 106, a radially inner surface 108a (FIGS. 3-4), and a radially outer surface 108b (FIGS. 3-4). As used herein, "forward end" may refer to the end of the component which is positioned within the template of the fixture and is to be drilled, whereas "back end" may refer to an end that is opposite of the forward end of the component. In the case of component 102 being a transition piece of a turbomachine, "forward end" may refer to the forward or upstream end 4 (FIG. 1) of transition piece 10 (FIG. 1) where wear pads are located. Fixture 100 may include a support structure 120, a template 130, and a centering device 150 (FIG. 2). Support structure 120 may be configured to position component 102 to be drilled thereon. Support structure 120 may be, for example, a table, a floor, or any other substantially flat surface which can accommodate a weight of component 102.

Template 130 may also be positioned on support structure 120. Template 130 may substantially surround component 102. More specifically, template 130 may substantially surround forward end 104 of component 102. As used herein, "substantially" refers to largely, for the most part, entirely specified or any slight deviation which provides the same technical benefits of the invention. Template 130 may be manufactured from, for example, a metal. In one embodiment, template 130 may include at least one arcuate plate. In some embodiments, template 130 may include four arcuate plates spaced evenly about component 102 on support structure 120. It is to be understood that template 130 may include any number of arcuate plates or may be one circumferential piece configured to surround component 102.

Template 130 is configured to locate a position on component 102 that is to be drilled. That is, template 130 may have at least one hole 132 therethrough which may accommodate a drill bit (not shown) of a drill 140 such that a drill bit may extend through the at least one hole 132 in template 130 in order to contact component 102 at a desired location on component 102 to be drilled. Additionally, in some embodiments, template 130 may include a pair of alignment holes 134 adjacent to the at least one hole 132 in template 130. Alignment holes 134 may be configured to accommodate a pair of alignment features (not shown) on drill 140. Drill 140 may include any drill known in the art capable of drilling a hole into component 102. In some embodiments, drill 140 may be, for example, but not limited to a compact automatic feed precision drill such as a Quakenbush™ drill.

Template 130 may include a pair of risers 138 to raise template 130 relative to support structure 120. Risers 138 may be used to adjust a height of template 130 such that the at least one hole 132 in template 130 is located at the desired position to be drilled on component 102. Risers 138 may be a fixed height or may be adjustable. Risers 138 may include, but are not limited to, blocks, wedges, shims or other structures capable of adjusting height of template 130.

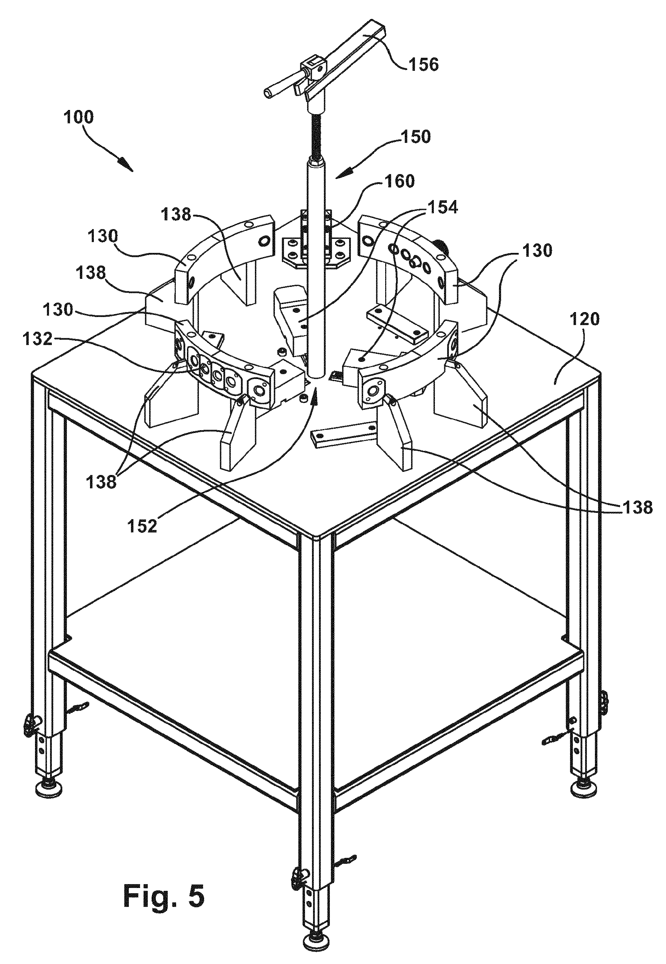

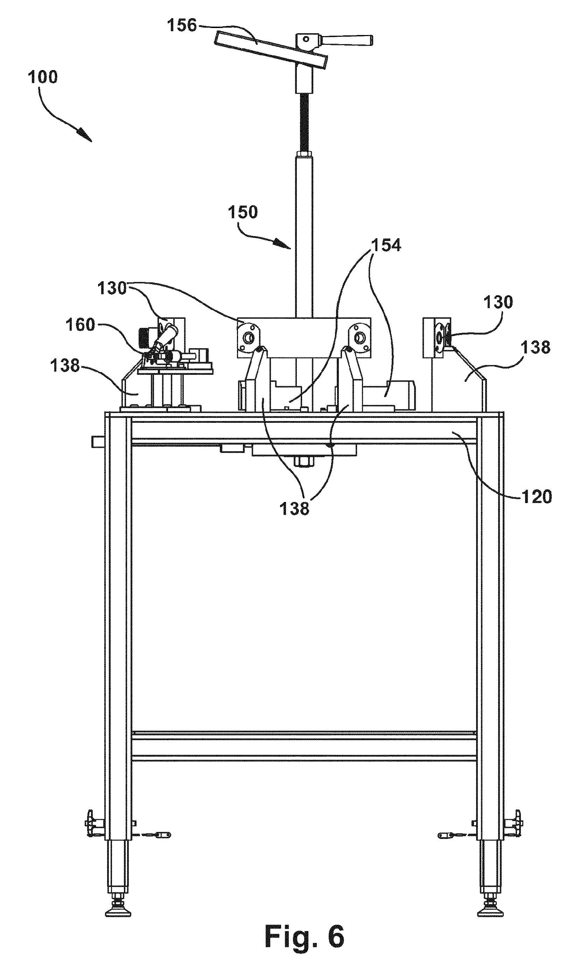

FIGS. 5-6 show fixture 100 in an inoperative state. As shown in FIGS. 5-6, centering device 150 may be fixed to and positioned on support structure 120. During an operative state, centering device 150 may be configured to center component 102 within template 130. That is, component 102 may be positioned on support structure 120 such that component 102 substantially surrounds centering device 150. Centering device 150 may include a component centering feature 152. Referring to FIGS. 1 and 5 together, component centering feature 152 may be adapted to engage a radially inner surface 108a (FIG. 2) of component 102. Component centering feature 152 may include at least three legs 154 extending radially outward from a center of centering device 150. Legs 154 may extend radially outward from centering device 150 such that legs 154 are spaced evenly about component 102 in an operative state. In other embodiments, component centering feature 152 may include any number of legs, for example, four or six legs. Each leg 154 may be adapted to engage radially inner surface 108a of component 102. That is, component centering feature 152 may be similar to a scroll screw in that each leg 154 may simultaneously extend radially outward at the same rate such that a position of component 102 adjusts as a respective leg 154 places pressure on radially inner wall 108a of component when radially inner wall 108a is contacted by the respective leg 154. Once each leg 154 is in contact with component 102, component 102 is maintained by the equal pressure placed radially outward about its radially inner wall 108a by each leg 154.

Additionally, centering device 150 may further include a component support 156. Component support 156 may be adapted to engage back end 106 of component 102 thereby assisting in maintaining the position of component 102 on support structure 120. Component support 156 may maintain the position of component 102 by supplying a downward force such that component 102 is being pressed against support structure 120. Component support 156 may include, but is not limited to, for example: a clamp, brace, band, clasp, vice or press.

Referring back to FIG. 4, fixture 100 may also include a component locating feature 160. Component locating feature 160 may be fixed to support structure 120. Component locating feature 160 may be configured to engage a support 162 on component 102 to orient component 102 on support structure 120. Component locating feature 160 may be used to further secure component 102 during drilling by locking into support 162 of component 102. Additionally, component locating feature 160 ensures proper radial location of component 102 during drilling. That is, component locating feature 160 enables a user to properly position component 102 on support structure 120 within template 130. Component locating feature 160 may be fixed on support structure 120 such that a user may align support 162 on component 102 with component locating feature 102. As described with reference to FIG. 1, a transition piece 10 may include support frames 12, 14 at forward end 4 and back end 6 of a transition piece. Support frames 12, 14 may include one or more female parts 18 on one side of transition piece 10 which are used to connect transition piece 10 into a turbomachine (not shown). Therefore, in the case where component 102 is a transition piece 10, and forward end 4 of transition piece 10 is being drilled, support 162 may be a forward end support 12 and component locating feature 160 may include a male part (not shown) which is configured to engage female part 18 of forward end support 12 of transition piece 10.

With reference to FIGS. 2-6, aspects of the invention will now be described with respect to a method for drilling hole into a component. More particularly, the method may be used to drill a hole into a transition piece of a turbomachine. For example, the method as described herein may be used to drill a wear pad replacement hole into the transition piece.

A first step of the method may include providing a component 102 within a template 130 on a support structure 120 such that component 102 substantially surrounds a centering device 150 on support structure 120. As previously discussed, template 130 may have at least one hole 132 therethrough and template 130 may include at least one arcuate plate having at least one hole therethrough. Component 102 may be provided within template such that component 102 is adjacent to the at least one arcuate plate.

A second step of the method may include centering component 102 within template 130 via centering device 150. As previously discussed, centering device 150 may include component centering feature 152 having at least three legs 154 and a component support 156. The step of centering component 102 may include adjusting component centering feature 152 such that each of the three legs 154 simultaneously extend radially outward to engage a radially inner surface 108a of component 102. Component centering feature 152 may be similar to a scroll screw in that each leg 154 may simultaneously extend radially outward at the same rate such that a position of component 102 adjusts as a respective leg 154 places pressure on radially inner wall 108a of component when radially inner wall 108a is contacted by the respective leg 154. Once each leg is in contact 154 component 102, component 102 is maintained by the equal pressure placed radially outward about its radially inner wall 108a by each leg 154.

The step of centering component 102 may also include engaging a back end 106 of component 102 via component support 156 thereby assisting in maintaining the position of component 102 on support structure 120. Component support 156 may maintain the position of component 102 by supplying a downward force such that component 102 is being pressed against support structure 120. As previously discussed, component support 156 may include, but is not limited to, for example: a clamp, brace, band, clasp, vice or a press.

Another step of the method may include engaging component 102 with component locating feature 160. More specifically, component locating feature 160 may engage with a support 162 on component 102 to orient component 102 on support structure 120. Engaging component 102 with component locating feature 160 may further secure component 102 during drilling. That is, component locating feature 160 may lock into support 162 of component 102. As described with reference to FIG. 1, in a case where component 102 is a transition piece 10, component locating feature 160 may engage forward end 4 support frame 12 which may include one or more female parts 18. In such a case, component locating feature 160 may include a male part (not shown) which is configured to engage female part 18 of forward end support 12 of transition piece 10. As previously discussed, component locating feature 160 ensures proper radial location of component 102 during drilling. That is, component locating feature 160 enables a user to properly position component 102 on support structure 120 within template 130. Component locating feature 160 may be fixed on support structure 120 such that a user may align support 162 on component 102 with component locating feature 102.

Another step of the method as described herein may include inserting a drill bit of drill 140 through the at least one hole 132 of the template 130 to drill a hole into component 102. In the case of component 102 being a transition piece 10 (FIG. 1), drill 140 may be used to drill a wear pad replacement hole into an impingement sleeve 22 of the transition piece 10.

Once hole is drilled, component 102 may be removed from fixture 100. In the case where component 102 is a transition piece 10 (FIG. 1) and a wear pad replacement hole has been drilled in impingement sleeve 22 (FIG. 1), a wear pad may be inserted between impingement sleeve 22 and transition piece forward ring 24 (FIG. 1). After insertion of the wear pad, transition piece 10 may be reinstalled into a turbomachine (not shown) as is known in the art.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, substantially materials, acts, and equivalents of all means or step plus function elements in the claims below are intended to include any structure, substantially material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

Various aspects and embodiments of the present invention are defined by the following clauses:
1. A fixture for securing a component to be drilled, the fixture comprising:
   a support structure positioning the component thereon;
   a template substantially surrounding the component configured to locate a position on the component that is to be drilled, the template being positioned on the support structure and having at least one hole therethrough; and
   a centering device positioned on the support structure configured to center the component within the template.
2. The fixture of clause 1, wherein the template includes at least one arcuate plate having at least one hole therethrough.
3. The fixture of clause 2, wherein the at least one arcuate plate includes four arcuate plates spaced evenly about the component on the support structure.
4. The fixture of clause 1, wherein the centering device includes a component centering feature adapted to engage a radially inner surface of the component.
5. The fixture of clause 4, wherein the component centering feature includes at least three legs spaced evenly about the component, each leg being adapted to engage the radially inner surface of the component.
6. The fixture of clause 1, wherein the centering device includes a component support adapted to engage a back end of the component and maintain a position of the component on the support structure.
7. The fixture of clause 1, wherein the template includes a pair of risers to raise the template relative to the support structure.
8. The fixture of clause 1, further comprising a component locating feature configured to engage a forward end support on the component to orient the component on the support structure.
9. A fixture for securing a transition piece of a turbomachine to be drilled, the fixture comprising:
   a support structure positioning the transition piece thereon;
   a template substantially surrounding the transition piece configured to locating a position on the component that is to be drilled, the template being positioned on the support structure and having at least one drill bit hole therethrough; and
   a centering device positioned on the support structure configured to center the component within the template.
10. The fixture of clause 9, wherein the template includes at least one arcuate plate having at least one drill bit hole therethrough.
11. The fixture of clause 10, wherein the at least one arcuate plate includes four metal arcuate plates spaced evenly about the transition piece on the support structure.
12. The fixture of clause 9, wherein the centering device includes a transition piece centering feature adapted to engage a radially inner surface of the component.
13. The fixture of clause 12, wherein the transition piece centering feature includes at least three legs spaced evenly about the transition piece, each leg being adapted to engage the radially inner surface of the transition piece.
14. The fixture of clause 9, wherein the centering device includes a transition piece support adapted engage an upper portion of the transition piece and maintain a position of the transition piece on the support structure.
15. The fixture of clause 9, further comprising a transition piece locating feature configured to engage a forward end support on the transition piece to orient the transition piece on the support structure.
16. The fixture of clause 9, wherein the template includes a pair of alignment holes on opposite sides of the drill bit hole, the drill bit hole configured to accommodate a drill bit and the pair of alignment holes configured to accommodate a pair of alignment features on the drill.
17. A method for drilling a wear pad replacement hole into a transition piece of a turbomachine, the method comprising:
   providing the transition piece within a template on a support structure such that the transition piece substantially surrounds a centering device on the support structure, the template having at least one hole therethrough;
   centering the transition piece within the template via the centering device;
   inserting a drill bit through the at least one hole of the template to drill the wear pad replacement hole into the transition piece.
18. The method of clause 17, wherein the providing the transition piece within a template includes providing the transition piece adjacent to at least one arcuate plate having at least one hole therethrough.
19. The method of clause 17, wherein the centering the transition piece includes adjusting a transition piece centering feature having at least three legs evenly spaced about the component such that each of the three legs simultaneously extend radially outward to engage a radially inner surface of the transition piece.
20. The method of clause 19, wherein the centering the transition piece further includes engaging an upper surface of the transition piece via a transition piece support being configured to maintain a position of the transition piece on the support structure.

## Claims

1. A fixture (100) for securing a transition piece (10) of a turbomachine to be drilled, the fixture (100) comprising:
a support structure (120) positioning the transition piece (10) thereon;
a template (130) substantially surrounding the transition piece (10) configured to locating a position on the component (102) that is to be drilled, the template (130) being positioned on the support structure (120) and having at least one drill bit hole (132) therethrough; and
a centering device (150) positioned on the support structure (120) configured to center the component (102) within the template (130).

2. The fixture (100) of claim 1, wherein the template (130) includes at least one arcuate plate having at least one drill bit hole (132) therethrough.

3. The fixture (100) of claim 2, wherein the at least one arcuate plate includes four metal arcuate plates spaced evenly about the transition piece (10) on the support structure (120).

4. The fixture (100) of claim 1, wherein the centering device (150) includes a transition piece (10) centering feature (152) adapted to engage a radially inner surface (108a) of the component (102).

5. The fixture (100) of claim 4, wherein the transition piece (10) centering feature (152) includes at least three legs (154) spaced evenly about the transition piece (10), each leg (154) being adapted to engage the radially inner surface (108a) of the transition piece (10).

6. The fixture (100) of claim 1, wherein the centering device (150) includes a transition piece (10) support (162) adapted to engage an upper portion of the transition piece (10) and maintain a position of the transition piece (10) on the support structure (120).

7. The fixture (100) of claim 1, further comprising a transition piece (10) locating feature (160) configured to engage a forward end (4, 104) support (162) on the transition piece (10) to orient the transition piece (10) on the support structure (120).

8. The fixture (100) of claim 1, wherein the template (130) includes a pair of alignment holes (134) on opposite sides of the drill bit hole (132), the drill bit hole (132) configured to accommodate a drill (140) bit and the pair of alignment holes (134) configured to accommodate a pair of alignment features on the drill (140).

9. A fixture (100) for securing a component (102) to be drilled, the fixture (100) comprising:
a support structure (120 positioning the component (102) thereon;
a template (130) substantially surrounding the component (102) configured to locate a position on the component (102) that is to be drilled, the template (130) being positioned on the support structure (120) and having at least one hole (132) therethrough; and
a centering device (150) positioned on the support structure (120) configured to center the component (102) within the template (130).

10. The fixture (100) of claim 9, wherein the centering device (150) includes a component centering feature (152) adapted to engage a radially inner surface (108a) of the component (102).

11. The fixture (100) of claim 10, wherein the component centering feature (152) includes at least three legs (154) spaced evenly about the component (102), each leg (154) being adapted to engage the radially inner surface of the component (102).

12. A method for drilling a wear pad replacement hole into a transition piece (10) of a turbomachine, the method comprising:
providing the transition piece (10) within a template (130) on a support structure (120) such that the transition piece (10) substantially surrounds a centering device (150) on the support structure (120), the template (130) having at least one hole (132) therethrough;
centering the transition piece (10) within the template (130) via the centering device (150);
inserting a drill bit through the at least one hole (132) of the template (130) to drill the wear pad replacement hole into the transition piece (10).

13. The method of claim 12, wherein the providing the transition piece (10) within a template (130) includes providing the transition piece (10) adjacent to at least one arcuate plate having at least one hole therethrough.

14. The method of claim 12, wherein the centering the transition piece (10) includes adjusting a transition piece centering feature having at least three legs (154) evenly spaced about the component such that each of the three legs (154) simultaneously extend radially outward to engage a radially inner surface of the transition piece (10) .

15. The method of claim 12, wherein the centering the transition piece (10) further includes engaging an upper surface of the transition piece (10) via a transition piece support being configured to maintain a position of the transition piece (10) on the support structure (120).
